# FASCICULE DE BREVET EUROPEEN

(11) **EP 0 755 184 B1**
(45) Date de publication et mention de la délivrance du brevet: **12.08.1998**
(21) Numéro de dépôt: 95917381.6
(22) Date de dépôt: 12.04.1995
(51) Int. Cl.: A01N 25/04, A01N 25/34, A01N 53/00

(54) **NOUVELLES FORMULATIONS PESTICIDES ET LEUR PROCEDE DE PREPARATION**
NEUE PESTIZIDFORMULIERUNGEN UND VERFAHREN ZU IHRER HERSTELLUNG
NOVEL PESTICIDE COMPOSITIONS AND METHOD OF PREPARATION

(30) Priorité: 14.04.1994 FR 9404440
(43) Date de publication de la demande: 29.01.1997
(73) Titulaire: Hoechst Schering AgrEvo S.A., 75020 Paris (FR)
(72) Inventeur: MEINARD, Colette, F-13012 Marseille (FR); SUGLIA, Jean-Claude, F-13112 Marseille (FR)
(74) Mandataire: Tonnellier, Marie-José
(86) Numéro de dépôt international: FR9500471
(87) Numéro de publication internationale: WO9528082

(56) Documents cités:
- EP-A- 0 391 851
- EP-A- 0 544 602
- WO-A-82/02647
- WO-A-92/01378
- WO-A-92/17385
- DE-C- 935 336
- DATABASE WPI Week 8713 Derwent Publications Ltd., London, GB; AN 87-091468 [13] & JP,A,62 042 902 (NIHON NOYAKU) , 24 Février 1987
- PATENT ABSTRACTS OF JAPAN vol. 4 no. 30 (C-2) [512] ,15 Mars 1980 & JP,A,55 004336 (KYORITSU SANITARII) 12 Janvier 1980,
- RESEARCH DISCLOSURE, no. 289, Mai 1988 HAVANT GB, pages 281-284, DISCLOSED ANONYMOUSLY '28928'
- DATABASE WPI Derwent Publications Ltd., London, GB; AN 93-149115 [18] & JP-A-05 085 901 (HOKKO CHEM IND) , 6 Avril 1993

## Description

La présente invention concerne de nouvelles formulations pesticides et leur procédé de préparation.

L'invention a pour objet les formulations pesticides se présentant sous forme de pâtes renfermant :
- entre 1 % et 80 % de matière active et de préférence entre 1 et 20 % de matière active pure ou en solution dans un solvant,
- entre 20 et 50 % d'agents effervescents,
- entre 0,30 et 2 % d'agents générateurs de micropores.

Les formulations de l'invention se présentent sous la forme d'une pâte épaisse ayant la propriété d'être effervescente et de posséder une structure microporeuse ce qui lui confère une très bonne dispersion dans l'eau.

Cette pâte peut se présenter à l'intérieur d'un sachet plastique soluble à l'eau, en granulés extrudés ou en plaquettes. Les deux dernières présentations nécessitant une opération de séchage.

Cette pâte est une composition qui possède un coefficient de viscoélasticité très faible, ce n'est pas une solution colloïdale comme un gel, mais résulte d'une absorption par un solide, d'un liquide jusqu'à saturation, la granulométrie des particules solides étant comprise entre 5 et 40 µ.

La matière active est en solution dans un solvant peu volatil et les émulsifiants contenus dans ce solvant permettent à la préparation de libérer le principe actif sous forme d'une émulsion après sa dilution dans l'eau.

Les formulations de l'invention possèdent une structure microporeuse facilitant leur dispersion dans l'eau au moment de leur utilisation. Cette structure est obtenue en provoquant un dégagement gazeux au sein de la pâte au moment de sa préparation. Le gaz est libéré par la réaction du générateur de micropores et de l'agent effervescent.

Un des avantages de l'invention est de présenter des formulations telles que des suspensions concentrées ou des concentrés émulsifiables habituellement liquides, sous la forme d'un solide ou d'une pâte.

Un autre avantage est d'éviter ainsi tout risque d'écoulement accidentel au cours du stockage, du transport ou de la manipulation du produit.

Un autre avantage est d'éviter les pertes de produits sur les parois des emballages au moment de l'utilisation.

Un autre avantage est, dans le cas où la pâte est contenue dans un sachet soluble dans l'eau de fournir un produit dont l'emballage restant après usage ne contient aucune trace de principe actif et dont la perte en cas d'ouverture ou de déchirure accidentelle est nulle contrairement à un liquide ou à un gel.

La matière active est un pesticide liquide ou solide, soluble ou insoluble dans l'eau.

Il peut s'agir d'un insecticide, d'un acaricide, d'un fongicide ou d'un régulateur de croissance.

Comme agent effervescent, on peut utiliser un mélange d'acide citrique et d'un carbonate ou hydrogénocarbonate alcalin ou alcalinoterreux, par exemple un carbonate de sodium ou de potassium ou un carbonate de calcium ou un hydrogénocarbonate de sodium ; on peut utiliser d'autres acides que l'acide citrique, par exemple l'acide ascorbique ou l'acide adipique.

Comme agent générateur de micropores, on peut utiliser un glycol qui réagit lentement avec l'agent effervescent et provoque un dégagement de gaz carbonique au sein de la pâte, il s'agit de préférence du monopropylène glycol.

L'invention a plus particulièrement pour objet les formulations pesticides renfermant renfermant de 20 à 50 % d'agents effervescents.

L'invention a notamment pour objet les formulations renfermant en outre de 3 à 10 % d'agents mouillants ou encore les formulations renfermant en outre de 20 à 40 % d'agents mouillants.

L'agent mouillant peut être un sel sodique d'acide aliphatique ou un lignosulfonate.

L'invention a notamment pour objet les formulations renfermant entre 5 et 40 % de charge minérale ou de charge organique pouvant éventuellement être substituée au mouillant.

Les charges minérales doivent posséder un pouvoir absorbant suffisant pour retenir sans désorption les constituants liquides de la formulation ; il s'agit de préférence de silices, par exemple de silice de type aérosil ou zéosil ou bien d'argiles comme l'argirec, le vercoryl, ou encore de silicates alumineux, potassiques ou sodiques anhydres ou enfin du borate de sodium.

Les charges organiques peuvent être par exemple choisies parmi les celluloses, les dérivés d'amidons ou de maïs, l'urée, le lactose et les sucres, la polyvinylpyrolidone.

L'invention a plus particulièrement pour objet les formulations pesticides renfermant en outre entre
- 0,1 et 0,5 % de produit anti-mousse,
- 0,01 et 70 % de solvant organique,
- 0,4 et 2 % de tensioactif,
- 0,01 et 0,05 % de stabilisant.

Le solvant utilisé est très important pour la réussite de l'invention, il doit être un bon solvant de la matière active, il peut s'agir par exemple d'un solvant aromatique, comme le Solvesso 200® ou d'un solvant isoparaffinique tel que l'Isopar V®.

Il peut s'agir également de solvants cétoniques telles que l'isophorone, l'acétophénone ou la cyclohexanone associés à différents co-solvants tels que l'acétate de n-butyle, l'arcosolv PMA (acétate de méthoxy propanol), le butylbenzoate ou encore le diéthylphtalate.

Le produit anti-mousse peut être par exemple le Rhodorsil®. Les tensioactifs et les stabilisants peuvent être par exemple ceux utilisés dans la partie expérimentale ou encore ceux connus pour leur être équivalents.

L'invention a tout spécialement pour objet les formulations caractérisées en ce que l'agent effervescent est un mélange d'acide citrique et de carbonate de sodium, les formulations caractérisées en ce que l'agent générateur de micropores est un glycol.

Parmi les formulations préférées de l'invention, on peut citer tout spécialement les formulations caractérisées en ce que la matière active est un pesticide fongicide, herbicide, insecticide et plus particulièrement pour les insecticides un pyréthrinoïde choisi dans le groupe des produits suivants : la deltaméthrine, la cyperméthrine, l'alphaméthrine, la tralométhrine, la cyalothrine, le fenvalérate, la cyfluthrine, le flucythrénate, le fluvalinate, la fenpropathrine, la téfluthrine, la bifenthrine, l'acrinathrine, la bétacyfluthrine, le taufluvalinate, la lambdacyalothrine et l'esfenvalérate.

L'invention a tout particulièrement pour objet les formulations dans lesquelles le pyréthrinoïde est la deltaméthrine, par exemple celles renfermant de 1 à 15 % de deltaméthrine.

L'invention a également pour objet un procédé de préparation caractérisé en ce que l'on prépare un concentré émulsifiable renfermant le principe actif, le verse sur le mélange des charges solides et malaxe le tout pour obtenir une pâte homogène.

Dans un mode de réalisation préféré du procédé de l'invention, la matière active est préformulée sous forme de concentré émulsifiable ou encore sous forme de suspension concentrée dans l'huile.

Les formulations selon l'invention sont introduites dans des sachets solubles dans l'eau, qui sont ensuite sertis et conditionnés dans un suremballage assurant la protection des sachets.

L'invention a donc également pour objet les formulations telles que définies ci-dessus conditionnés dans un sachet soluble.

Ce sachet peut être notamment constitué d'un film en PVA hydrosoluble multicouche ou monocouche ou d'un film laminé double couche. On peut citer par exemple les films NEDI ®, EF 300 ou EP 300.

Afin d'éviter un gonflement éventuel pendant le stockage des sachets, on peut ajouter dans la composition de la pâte entre 2 et 10 % d'agent déshydratant tel que le sulfate de sodium, le chlorure de calcium, l'anhydride maléique ou encore des solvants capteurs d'eau tels que la cyclohexanone ou l'acétophénone par exemple.

Les formulations ainsi obtenues ont une bonne stabilité et une bonne activité biologique.

Les pâtes de l'invention diluées dans l'eau en donnant une émulsion sont utilisées de préférence en agriculture, dans le traitement des cultures ou encore dans le traitement des animaux ou en hygiène publique et domestique. Les domaines d'utilisation sont ceux des matières premières utilisées.

Les exemples suivants illustrent l'invention :

Les formulations de l'invention sont préparées comme suit :

### A - Préparation du concentré émulsifiable de base

Les différents ingrédients, tensioactifs, solvants, matières actives, stabilisants et autres sont mélangés sous agitation jusqu'à l'obtention d'une solution.

### B - Préparation des charges solides

Les charges solides doivent avoir une granulométrie de moins de 15 µ. Si ce n'est pas le cas elles devront être micronisées. Elles sont ensuite mélangées dans un appareil de type Lödige.

### C - Préparation de la pâte

Le concentré émulsifiable est versé sur le mélange des charges solides, le tout est ensuite malaxé dans un appareil jusqu'à l'obtention d'une pâte homogène.

### D - Conditionnement de préférence

La pâte obtenue est placée dans un sachet hydrosoluble celui-ci est ensuite serti.

### Préparation du concentré émulsifiable de base

On a préparé un concentré émulsifiable renfermant :

| | |
|---|---|
| Deltaméthrine 100 % | 14,50 % |
| B.H.T. | 0,10 % |
| Phénylsulfonate de CA | 5,03 % |
| Emulsogen EL 360 | 1,67 % |
| Solvesso 200 | 78,70 % |

### EXEMPLE 1 : on a préparé une pâte renfermant 5 % de deltaméthrine

| | |
|---|---|
| Carbonate de sodium anhydre | 22,5 % |
| Acide citrique anhydre | 22,5 % |
| Mouillant IS poudre | 20,0 % |
| Monopropylèneglycol | 0,4 % |
| Antimousse 425 | 0,1 % |
| Concenté émulsifiable de deltaméthrine | 34,5 % |

### EXEMPLE 2 : on a préparé une pâte répondant à la formulation

| | |
|---|---|
| Carbonate de sodium anhydre | 12,0 % |
| Acide citrique anhydre | 12,0 % |
| Minex 10 | 32,5 % |
| Morwet D425 | 2,5 % |
| Mouillant IS poudre | 6,0 % |
| Antimousse 425 | 0,1 % |
| Monopropylèneglycol | 0,4 % |
| Concenté émulsifiable de deltaméthrine | 34,5 % |

Les pâtes des exemples 1 et 2 peuvent être conditionnées dans des sachets de PVA solubles à l'eau. Un emballage extérieur en aluminium revêtu de PVC peut assurer la protection de ces sachets.

### EXEMPLE 3 : on a préparé des granulés à 5 % de deltaméthrine renfermant

| | |
|---|---|
| Carbonate de sodium anhydre | 10,0 % |
| Acide citrique anhydre | 10,0 % |
| Lactose 1 H20 | 19,0 % |
| Mouillant IS poudre | 26,0 % |
| Antimousse 425 | 0,1 % |
| Monopropylèneglycol | 0,4 % |
| Concenté émulsifiable de deltaméthrine | 34,5 % |

### EXEMPLE 4 : on a préparé des granulés de formule

| | |
|---|---|
| Carbonate de sodium anhydre | 12,0 % |
| Acide citrique anhydre | 12,0 % |
| Minex 10 | 32,5 % |
| Morwet D425 | 2,5 % |
| Mouillant IS poudre | 6,0 % |
| Antimousse 454 | 0,1 % |
| Monopropylèneglycol | 0,4 % |
| Concenté émulsifiable de deltaméthrine | 34,5 % |

### EXEMPLE 5 : on a préparé des plaquettes ou pastilles à 5 % de deltaméthrine de formule

| | |
|---|---|
| Carbonate de sodium anhydre | 12,0 % |
| Acide citrique anhydre | 12,0 % |
| Minex 10 | 32,5 % |
| Morwet D425 | 2,5 % |
| Mouillant IS poudre | 4,5 % |
| Monopropylèneglycol | 1,9 % |
| Antimousse 425 | 0,1 % |
| Concenté émulsifiable de deltaméthrine | 34,5 % |

En opérant comme indiqué ci-dessus, on a préparé les formulations suivantes :

Les préparations des exemples 6 à 11 sont conditionnées dans des sachets de PVA, film Nedi EF.210.

| INGREDIENT | Ex.6 | Ex.7 | Ex.8 | Ex.9 | Ex.10 | Ex.11 |
|---|---|---|---|---|---|---|
| DELTAMETHRINE | 5,040 | 5,040 | 5,040 | 5,040 | 5,040 | 5,040 |
| BHT | 0,035 | 0,035 | 0,035 | 0,035 | 0,035 | 0,035 |
| PHENYLSULFONATE CALCIUM | 0,745 | 0,745 | 0,745 | 0,745 | 0,745 | 0,851 |
| EMULSOGEN EL | 1,738 | 1,738 | 1,738 | 1,738 | 1,738 | 1,631 |
| ISOPHORONE | 21,278 | 21,278 | | 21,278 | 21,278 | 21,278 |
| SOLVESSO 200 | 6,631 | | | | | |
| ARCOSOLV PMA | | 6,631 | | | | |
| ANISOLE | | | 27,909 | | | |
| BUTYLBENZOATE | | | | 6,631 | | |
| ACETATE DE n-BUTYLE | | | | | 6,631 | |
| DIETHYLPHTALATE | | | | | | 6,631 |
| CARBONATE SODIUM | 22,340 | 22,340 | 22,340 | 22,340 | 22,340 | 22,340 |
| ACIDE CITRIQUE | 22,340 | 22,340 | 22,340 | 22,340 | 22,340 | 22,340 |
| MOUILLANT IS | 19,853 | 19,853 | 19,853 | 19,853 | 19,853 | 19,853 |

Les préparations des exemples 12 à 17 sont conditionnées dans des sachets de PVA, film Nedi EF AK.

| INGREDIENT | Ex.12 | Ex.13 | Ex.14 | Ex.15 | Ex.16 | Ex.17 |
|---|---|---|---|---|---|---|
| DELTAMETHRINE | 5,040 | 5,040 | 5,040 | 5,040 | 5,040 | 5,040 |
| BHT | 0,035 | 0,035 | 0,035 | 0,035 | 0,035 | 0,035 |
| PHENYLSULFONATE CALCIUM | 0,745 | 0,745 | 0,745 | 0,745 | 0,745 | 0,851 |
| EMULSOGEN EL | 1,738 | 1,738 | 1,738 | 1,738 | 1,738 | 1,631 |
| ISOPHORONE | 21,278 | 21,278 | | 21,278 | 21,278 | 21,278 |
| SOLVESSO 200 | 6,631 | | | | | |
| ARCOSOLV PMA | | 6,631 | | | | |
| ANISOLE | | | 27,909 | | | |
| BUTYLBENZOATE | | | | 6,631 | | |
| ACETATE DE n-BUTYLE | | | | | 6,631 | |
| DIETHYLPHTALATE | | | | | | 6,631 |
| CARBONATE SODIUM | 22,340 | 22,340 | 22,340 | 22,340 | 22,340 | 22,340 |
| ACIDE CITRIQUE | 22,340 | 22,340 | 22,340 | 22,340 | 22,340 | 22,340 |
| MOUILLANT IS | 19,853 | 19,853 | 19,853 | 19,853 | 19,853 | 19,853 |

La préparation de l'exemple 18 est conditionnée dans des sachets de PVA, film Nedi EF.210.

La préparation de l'exemple 19 est conditionnée dans des sachets de PVA, film Nedi EF AK.

| INGREDIENTS | Ex. 18 Composi.% | Ex. 19 Composi.% |
|---|---|---|
| DELTAMETHRINE 98,5% | 5,04 | 5,04 |
| BHT | 0,10 | 0,10 |
| DIETHYLPHTALATE | 0,70 | 0,70 |
| ACETOPHENONE | 13,90 | 13,90 |
| EMULSOGEN EL | 1,90 | 1,90 |
| SOLVESSO 200 | 13,76 | 13,76 |
| CO₃Na₂ | 15,40 | 15,40 |
| ACIDE CITRIQUE ANHYDRE | 29,30 | 29,30 |
| MOUILLANT IS | 19,90 | 19,90 |

### Préparation du concentré émulsifiable de base :

On a préparé un concentré émulsifiable renfermant :

| INGREDIENT | Ex.20 | Ex.21 | Ex.22 | Ex.23 | Ex.24 |
|---|---|---|---|---|---|
| DELTAMETHRINE 98,5% | 14,2 | 14,2 | 14,2 | 14,2 | 14,2 |
| BHT | 0,1 | 0,1 | 0,1 | 0,1 | 0,1 |
| PHENYLSULFONATE CALCIUM | 3,5 | 3,5 | 3,5 | 3,5 | 3,5 |
| EMULSOGEN EL | 3,5 | 3,5 | 3,5 | 3,5 | 3,5 |
| SOLVESSO 200 | 48,7 | 0 | 0 | 0 | 0 |
| CYCLOHEXANONE | 30,0 | 30,0 | 30,0 | 30,0 | 30,0 |
| ARCOSOLV PMA | | 48,7 | 0 | 0 | 0 |
| ANISOLE | | | 0 | 0 | 0 |
| BUTYLBENZOATE | | | 48,7 | 0 | 0 |
| ACETATE DE n-BUTYLE | | | | 48,7 | 0 |
| DIETHYLPHTALATE | | | | | 48,7 |

### Etude de stabilité

On a étudié le comportement au stockage des formulations de l'invention.

### Etude biologique

L'activité insecticide des formulations de l'invention a été étudiée sur Rhopalosiphum padi (femelles aptères au premier et second stade larvaire), la plante hôte étant le thé (stade 2 f. variété Florence-Aurore). Les formulations de l'invention sont aussi efficaces que la formulation commerciale Décis ® EC 25 g/l. Les formulations ont donc une excellente activité.

## Revendications

1. Les formulations pesticides se présentant sous forme de pâtes renfermant :
- entre 1 % et 80 % de matière active pure ou en solution,
- de 20 à 50 % d'agents effervescents,
- entre 0,30 et 2 % d'agents générateurs de micropores.

2. Les formulations pesticides selon la revendication 1, renfermant de 30 à 50 % d'agents effervescents.

3. Les formulations pesticides selon la revendication 1, renfermant en outre de 3 à 10 % d'agents mouillants.

4. Les formulations pesticides selon la revendication 1, renfermant en outre de 20 à 40 % d'agents mouillants.

5. Les formulations selon l'une des revendications 1 ou 4, renfermant entre 5 et 40 % de charge minérale.

6. Les formulations pesticides selon l'une quelconque des revendications 1 à 5, caractérisées en ce qu'elles renferment en outre entre :
- 0,1 et 0,5 % de produit anti-mousse,
- 0,01 et 70 % de solvant organique,
- 0,4 et 2 % de tensioactif,
- 0,01 et 0,05 % de stabilisant.

7. Les formulations selon l'une quelconque des revendications 1 à 6, caractérisées en ce que l'agent effervescent est un mélange d'acide citrique et de carbonate de sodium.

8. Les formulations selon l'une quelconque des revendications 1 à 7, caractérisées en ce que l'agent générateur de micropores est un glycol.

9. Les formulations selon l'une quelconque des revendications 1 à 8, caractérisées en ce que la matière active est un pyréthrinoïde choisi dans le groupe des produits suivants : la deltaméthrine, la cyperméthrine, l'alphaméthrine, la tralométhrine, la cyalothrine, le fenvalérate, la cyfluthrine, le flucythrénate, le fluvalinate, la fenpropathrine, la téfluthrine, la bifenthrine, l'acrinathrine, la bétacyfluthrine, le taufluvalinate, la lambdacyalothrine et l'esfenvalérate.

10. Les formulations selon la revendication 9 dans lesquelles le pyréthrinoïde est la deltaméthrine.

11. Les formulations selon la revendication 10 renfermant de 1 à 15% de deltaméthrine.

12. Procédé de préparation des formulations selon l'une quelconque des revendications 1 à 11, caractérisé en ce que l'on prépare un concentré émulsifiable renfermant le principe actif, le verse sur le mélange des charges solides et malaxe le tout pour obtenir une pâte homogène.

13. Les formulations selon l'une quelconque des revendications 1 à 11, caractérisées en ce que la matière active est préformulée sous forme de concentré émulsifiable.

14. Les formulations selon l'une quelconque des revendications 1 à 11, caractérisées en ce que la matière active est préformulée sous forme de suspension concentrée dans l'huile.

15. Les formulations selon l'une quelconque des revendications 1 à 14, caractérisées en ce qu'elles sont conditionnées dans un sachet soluble.

16. Les formulations selon l'une quelconque des revendications 1 à 15, caractérisées en ce qu'elles renferment en outre 2 à 10% d'agent déshydratant.

## Claims

1. Pesticide formulations being presented in the form of pastes containing:
- between 1% and 80% of active ingredient, pure or in solution,
- between 0 and 50% of effervescent agents,
- between 0.30 and 2% of micropore-generating agents.

2. Pesticide formulations according to claim 1, containing from 30 to 50% of effervescent agents.

3. Pesticide formulations according to claim 1, containing in addition 3 to 10% of wetting agents.

4. Pesticide formulations according to claim 1, containing in addition 20 to 40% of wetting agents.

5. Formulations according to one of claims 1 or 4, containing between 5 and 40% of a mineral filler.

6. Pesticide formulations according to any one of claims 1 to 5, characterized in that they contain in addition between:
- 0.1 and 0.5% of anti-foam product,
- 0.01 and 70% of organic solvent,
- 0.4 and 2% of surfactant,
- 0.01 and 0.05% of stabilizing agent.

7. Formulations according to any one of claims 1 to 6, characterized in that the effervescent agent is a mixture of citric acid and sodium carbonate.

8. Formulations according to any one of claims 1 to 7, characterized in that the micropore-generating agent is a glycol.

9. Formulations according to any one of claims 1 to 8, characterized in that the active ingredient is a pyrethrinoid chosen from the following group of products: deltamethrin, cypermethrin, alphamethrin, tralomethrin, cyhalothrin, fenvalerate, cyfluthrin, flucythrenate, fluvalinate, fenpropathrin, tefluthrin, bifenthrin, acrinathrin, betacyfluthrin, taufluvalinate, lambdacyalothrin and esfenvalerate.

10. Formulations according to claim 9 in which the pyrethrinoid is deltamethrin.

11. Formulations according to claim 10 containing from 1 to 15% of deltamethrin.

12. Preparation process for formulations according to any one of claims 1 to 11, characterized in that an emulsifiable concentrate is prepared containing the active ingredient, it is poured over the mixture of solid fillers and the whole is mixed in order to obtain a homogeneous paste.

13. Formulations according to any one of claims 1 to 11, characterized in that the active ingredient is pre-formulated in the form of an emulsifiable concentrate.

14. Formulations according to any one of claims 1 to 11, characterized in that the active ingredient is pre-formulated in the form of a concentrated suspension in oil.

15. Formulations according to any one of claims 1 to 14, characterized in that they are packaged in a soluble sachet.

16. Formulations according to any one of claims 1 to 15, characterized in that they contain in addition 2 to 10% of a dehydrating agent.

## Patentansprüche

1. Die Pestizidformulierungen, die in Form von Pasten vorliegen, die:
- zwischen 1% und 80% Wirkstoff, rein oder in Lösung,
- 20 bis 50% Brausestoffe,
- zwischen 0,30 und 2% Mikroporen bildende Mittel enthalten.

2. Die Pestizidformulierungen gemäß Anspruch 1, die 30 bis 50% Brausestoffe enthalten.

3. Die Pestizidformulierungen gemäß Anspruch 1, die außerdem 3 bis 10% Benetzungsmittel enthalten.

4. Die Pestizidformulierungen gemäß Anspruch 1, die außerdem 20 bis 40% Benetzungsmittel enthalten.

5. Die Formulierungen gemäß einem der Ansprüche 1 oder 4, die zwischen 5 und 40% Mineralfüllstoff enthalten.

6. Die Pestizidformulierungen gemäß einem der Ansprüche 1 bis 5, dadurch gekennzeichnet, daß sie außerdem zwischen:
- 0,1 und 0,5% Antischaummittel,
- 0,01 und 70% organisches Lösungsmittel,
- 0,4 bis 2% Tensid,
- 0,01 bis 0,05% Stabilisator
enthalten.

7. Die Formulierungen gemäß einem der Ansprüche 1 bis 6, dadurch gekennzeichnet, daß der Brausestoff ein Gemisch aus Citronensäure und Natriumcarbonat ist.

8. Die Formulierungen gemäß einem der Ansprüche 1 bis 7, dadurch gekennzeichnet, daß das Mikroporen bildende Mittel ein Glykol ist.

9. Die Formulierungen gemäß einem der Ansprüche 1 bis 8, dadurch gekennzeichnet, daß der Wirkstoff ein aus der Gruppe der folgenden Produkte ausgewähltes Pyrethroid ist: Deltamethrin, Cypermethrin, Alphamethrin, Tralomethrin, Cyhalothrin, Fenvalerat, Cyfluthrin, Flucythrenat, Fluvalinat, Fenpropathrin, Tefluthrin, Bifenthrin, Acrinathrin, Betacyfluthrin, Taufluvalinat, Lambdacyhalothrin und Esfenvalerat.

10. Die Formulierungen gemäß Anspruch 9, in denen das Pyrethroid Deltamethrin ist.

11. Die Formulierungen gemäß Anspruch 10, die 1 bis 15% Deltamethrin enthalten.

12. Verfahren zur Herstellung von Formulierungen gemäß einem der Ansprüche 1 bis 11, dadurch gekennzeichnet, daß man emulgierbares Konzentrat, das den Wirkstoff enthält, herstellt, es auf das Gemisch der Füllstoffe gießt und das ganze knetet, um eine homogene Paste zu erhalten.

13. Die Formulierungen gemäß einem der Ansprüche 1 bis 11, dadurch gekennzeichnet, daß der Wirkstoff in Form von emulgierbarem Konzentrat vorformuliert wird.

14. Die Formulierungen gemäß einem der Ansprüche 1 bis 11, dadurch gekennzeichnet, daß der Wirkstoff in Form von in Öl konzentrierter Suspension vorformuliert wird.

15. Die Formulierungen gemäß einem der Ansprüche 1 bis 14, dadurch gekennzeichnet, daß sie in einem löslichen Beutel verpackt sind.

16. Die Formulierungen gemäß einem der Ansprüche 1 bis 15, dadurch gekennzeichnet, daß sie außerdem 2 bis 10% Dehydratisierungsmittel enthalten.
